# EUROPEAN PATENT SPECIFICATION

(11) **EP 1 536 594 B1**
(45) Date of publication and mention of the grant of the patent: **10.10.2007**
(21) Application number: 04255004.6
(22) Date of filing: 19.08.2004
(51) Int. Cl.: H04L 12/407, G05B 19/418

(54) **Redundant information transmission system based on two parallel transmission lines and corresponding method**
Auf zwei parallelen Übertragungsleitungen basierendes redundantes Informationübertragungssystem und -verfahren
Système redondant de transmission d'information basé sur deux lignes de transmission parallèles et procédé correspondant

(30) Priority: 25.11.2003 JP 2003393520
(43) Date of publication of application: 01.06.2005
(73) Proprietor: Hitachi, Ltd., Tokyo 100-8280 (JP); HITACHI INFORMATION & CONTROL SYSTEMS, INC., Hitachi-shi, Ibaraki 319-1293 (JP)
(72) Inventor: Sato, Yutaka, Hitachi-shi, Ibaraki 316-0025 (JP); Nagasu, Masahiro, Hitachinaka-shi, Ibaraki 312-0061 (JP); Yanai, Shigenobu, Hitachinaka-shi, Ibaraki 312-0014 (JP); Ishida, Keiji, Hitachinaka-shi, Ibaraki312-0042 (JP); Uchiyama, Toshihiko, Hitachi-shi, Ibaraki 319-1221 (JP)
(74) Representative: Paget, Hugh Charles Edward

(56) References cited:
- EP-A1- 0 854 610
- WO-A1-01/63850
- US-A- 5 187 709
- US-A1- 2002 027 877
- ROSTAMZADEH B ET AL: "DACAPO: a distributed computer architecture for safety-critical control applications" INTELLIGENT VEHICLES '95 SYMPOSIUM., PROCEEDINGS OF THE DETROIT, MI, USA 25-26 SEPT. 1995, NEW YORK, NY, USA,IEEE, US, 25 September 1995 (1995-09-25), pages 376-381, XP010194147 ISBN: 0-7803-2983-X
- PATENT ABSTRACTS OF JAPAN vol. 0170, no. 81 (E-1321), 18 February 1993 (1993-02-18) & JP 4 278751 A (FUJITSU LTD), 5 October 1992 (1992-10-05)

## Description

### BACKGROUND OF THE INVENTION

The present invention relates to an improved information transmission system which can continue transmitting even at the time of failure and an improved information transmission method.

Recently, the information transmission by the network has been put to practical use in various fields. Among these networks, there is one for which the reliability and the safety of the high degree like the network for the contr ol of the rolling stock etc. are necessary, too. The network of the rolling stock controls the brake, the inverter, and the door, etc. Therefore, the influence is very large when the breakdown occurs. Therefore, a reliable information transmission system i s hoped for, in which transmission might not be cut off even when multiple troubles occur in transmission lines and transmission equipment.

The network technology for a rolling stock which can continue transmitting even if multiple troubles occur is disclosed in Japanese Patent Application Laid-Open No. 11-154891. In the technology of Japanese Patent Application Laid-Open No. 11-154891, two transmission stations are provided respectively in each car. The transmission stations in each car is assumed to be a first transmission line, the loop connection is done, and two terminals in each car are connected to each other as the second transmission line. The transmission can be continued by forming the detour with the second transmission line when the trouble occurs in the first transmission line.

WO01/63850 discloses a method and apparatus for detecting and managing the sate of a computer network. Network nodes are provided with redundant network connections, allowing recovery from multiple network faults.

Rostamzadeh B et al "DAPCO: a distributed computer architecture for safety critical control applications", Intelligent Vehicles '95 Symposium. Proceedings of the Detroit, MI, USA, 25-26 Sept 1995, New York, NY, USA, IEEE, US 25 September 1995, pages 376-381, XP010194147 ISBN: 0-7803-2983-X discloses a computer architecture for a highly dependable real-time computer network suitable for cyclic time-deterministic applications. Nodes are provided with two sets of functionally fail-silent units, providing tolerance against any single fault.

EP-A-854610 discloses a redundancy method for Ethernet communication between a plurality of nodes, the nodes being connected to each other in a duplex state through two independent communication lines.

JP-A-4-278751 discloses a system controlling communication provided with plural transmission lines. Thus the system is able smoothly to continue data communication when a fault occurs.

US-A-2002/0027877 discloses a packet processing method comprising dual nodes. The dual nodes are connected as a ring shape, separately having two input lines and two output lines, allowing multiple fault tolerance.

US-A-5,187,709 discloses a communications network adapted to provide communication between control modules each having a first and second transceiver.

### SUMMARY OF THE INVENTION

In general, it is necessary to always understand the operating condition of the equipment and the network in the network to control the equipment for the railways, etc. Therefore, the initialization processing is carried out by transmitting data for configuration management in order to confirm the configuration of the equipment. Afterwards, the transmission of usual control data begins. The state of transmission and network configuration are always checked at this time by the control data to be controlled and configuration management data.

The technology described in Japanese Patent Application Laid-Open No. 11-154891 prevents transmission being cut off by the change in the transmission route for the trouble of the transmission line caused while transmitting data. The exchange of route information by the configuration management data is indispensable to recognize between the transmission terminals the route possible to communicate to achieve this. Therefore, it is necessary to initialize again to select the transmission route after the occurrence of failure. However, the exchange of route information is not easy, and the processing is complex and takes time because there is a trouble in the transmission line. There is a method of deciding the candidate of the route to be selected when the trouble occurs by exchanging configuration management information before the trouble happens as one means to solve the problem. However, there is a problem that the route possible to communicate cannot be recognized when starting with the trouble occurred by this method.

An object of the present invention is to provide an information transmission system that can continue transmitting without exchanging route information even at the time of multiple troubles, and that has the simple and reliable configuration.

In one aspect, the present invention provides an information transmission system as set out in claim 1.

It is possible to transmit without needing the exchange of route information also at multiple troubles, and a brief, reliable network can be constructed according to the information transmission system of the present invention.

When the present invention is applied to the transmission of the configuration management data, the initialization can be carried out even at troubles.

In another aspect, the present invention provides a method of operating an information transmission system as set out in claim 4.

### BRIEF DESCRIPTION OF DRAWINGS

FIG. 1 shows the transmission procedure of data and the configuration of the information transmission system for a rolling stock according to a first embodiment of the present invention.
FIG. 2 shows the connection configuration of equipment in the car in the information transmission system for a rolling stock according to the first embodiment of the present invention.
FIG. 3 shows the structure of the transmission data at a first time point in the information transmission system for a rolling stock according to the first embodiment of the present invention.
FIG. 4 shows the structure of the transmission data at a second time point in the information transmission system for a rolling stock according to the first embodiment of the present invention.
FIG. 5 shows the structure of the transmission data at an I-th time point in the information transmission system for a rolling stock according to the first embodiment of the present invention.
FIG. 6 is a block diagram showing the concrete configuration of a transmission terminal in the information transmission system for a rolling stock according to the first embodiment of the present invention.
FIG. 7 is a processing flowchart of the data receiving at the transmission terminal in the first embodiment of the present invention.
FIG. 8 shows the configuration of the information transmission system when the car is divided in the first embodiment of the present invention.
FIG. 9 shows the configuration of an information transmission system for a rolling stock according to a second embodiment of the present invention and the transmission procedure of data.
FIG. 10 shows the configuration of the transmission data in an information transmission system for a rolling stock according to a second embodiment of the present invention.
FIG. 11 is a block diagram showing the configuration of the information transmission system for a rolling stock according to a third embodiment of the present invention.

### DESCRIPTION OF THE PREFERRED EMBODIMENTS

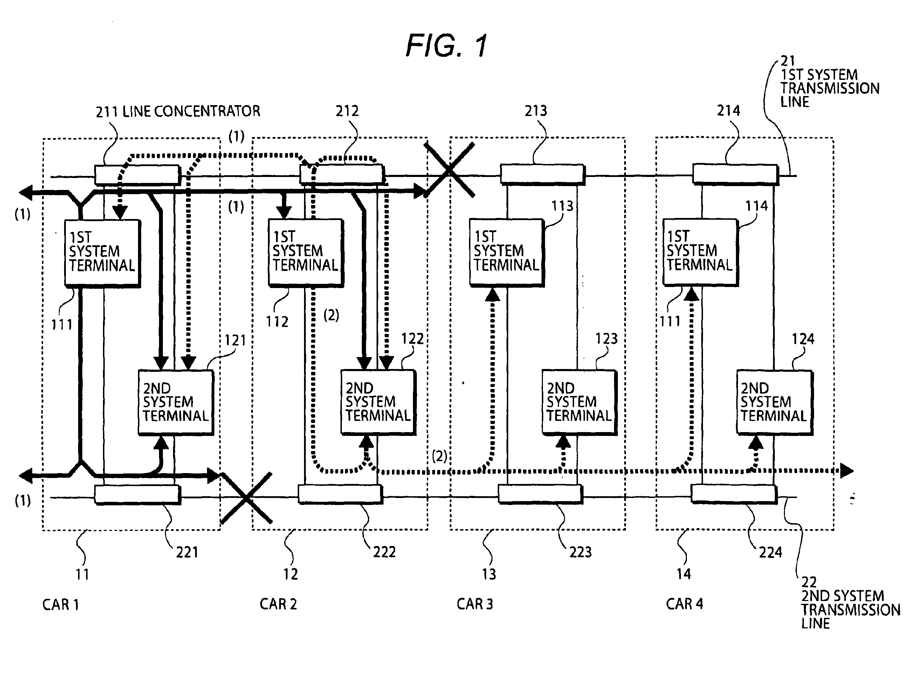

The transmission procedure of data and the configuration of the information transmission system for a rolling stock according to a first embodiment of the present invention are shown in FIG. 1. First of all, the system configuration is explained. Transmission terminals 111, 121, 112, 122, 113, 123, 114, and 124 are provided in each car of car 111 to car 414.

The transmission terminals of each car configure a duplex system to secure redundancy. The terminals 111 to 114 shown upward configure a 1st system, and the terminals 121 to 124 shown downward config ure a second system. These transmission terminals 111 to 114 and 121 to 124 are connected to both of 1st main transmission line 21 and 2nd main transmission line 22 to ensure the data transmission between the transmission terminals. Line concentrators 211 to 214 and 221 to 224 (It is called hubs) are used for the connection of each transmission terminal and both main transmission lines 21, 22. Plural equipment in the car is connected to each transmission terminal 111 to 114 and 121 to 124 though omitted in FIG. 1.

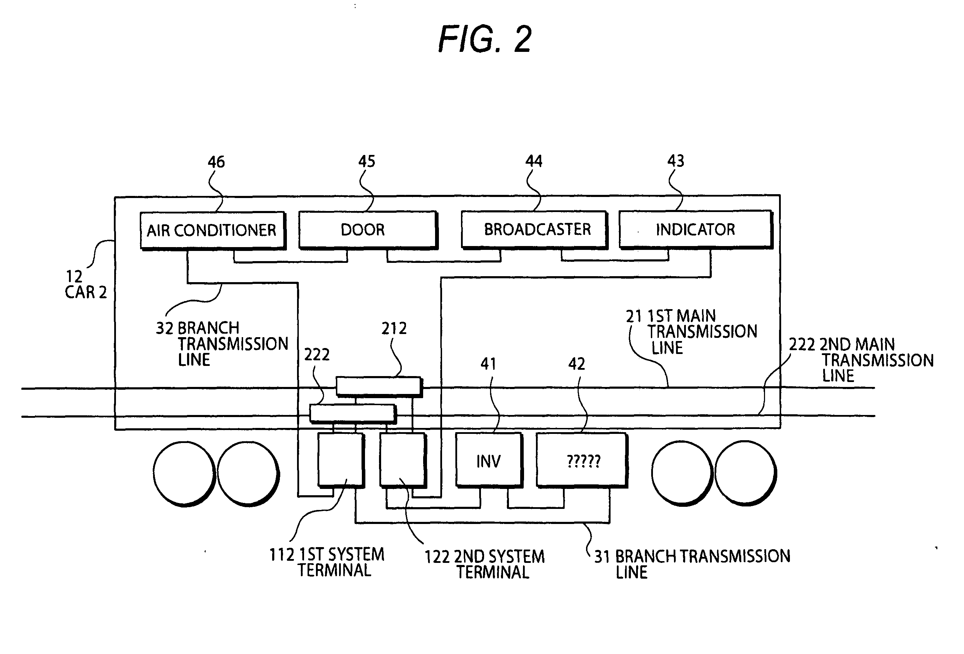

FIG. 2 shows the connection configuration of equipment in the car in the information transmission system for a rolling stock according to the first embodiment of the present invention. Here, car 212 is shown as one example. Each equipment is connected with transmission terminals 112, 122 by using two branch transmission lines 31 and 32. Branch line transmission line 31 connects equipment such as inverters 41 and brakes 42 arranged under the floor. Branch line transmission line 32 connects equipment such as indicator 43, broadcaster 44, door 45, and air conditioner 46 arranged above the floor. Moreover, transmission terminal 112 and 122 are arranged at both ends of branch line transmission lines 31 and 32 and each equipment is connected in the middle thereof so that it may become possible to communicate with either transmission terminal 112 or 122 even when the breakdown such as the disconnection etc. occurs in the part of main transmission lines 21 and 22. The equipment in the car can mutually transmit the instruction value and status information, etc. via branch line transmission lines 31, 32, line concentrators 212, 222, and main transmission lines 21, 22.

Next, a method of transmitting data between transmission terminals 111 to 114 and 121 to 124 is explained referring to FIG. 1. The transmission terminal of data source station transmits the same data to both main transmission lines 21 and 22. If any troubles do not occur in the network, other transmission terminals receive the same data from each transmission terminals through both main transmission lines 21 and 22.

It is assumed that the disconnection occurs between car 212 and car 313 in 1st system main transmission line 21 and between car 111 and car 212 in 2nd system main transmission line 22 as shown by sign X. Moreover, it is assumed that 1 st system transmission terminal 111 of car 111 transmits data as shown by (1). At this time, data cannot be transmitted to car 313 and car 414 through 1st system main transmission line 21, and data cannot be transmitted to car 212 to car 414 through 2nd system main transmission line 22. Therefore, the data from car 111 is not delivered to car 313 and car 414 through any main transmission lines, and this is a serious trouble.

When data is transmitted, not only the data of the transmission terminal but also the data of other transmission terminals which have already been received are transmitted simultaneously in this embodiment.

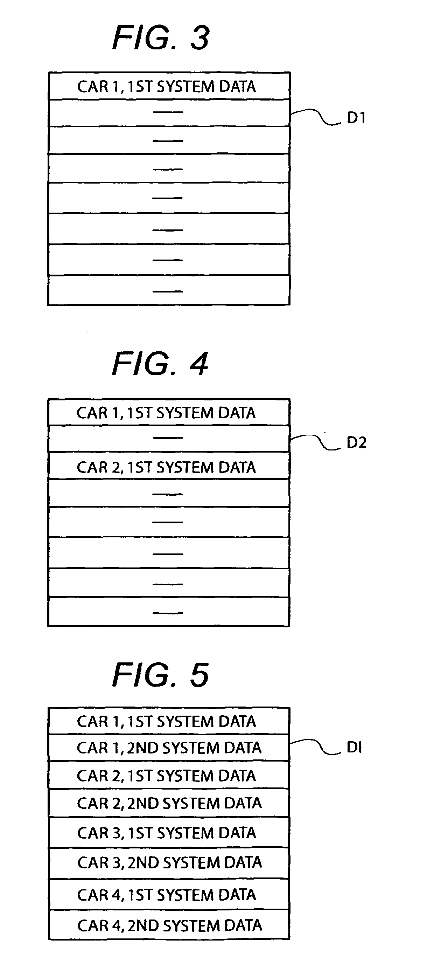

FIG. 3 to FIG. 5 show the structure of the transmission data in the information transmission system for a rolling stock according to the first embodiment of the present invention. The columns which describes the data of not only the source transmission terminal but also all the transmission terminals are provided in the transmission data.

FIG. 3 is a structure view of data D1 transmitted from 1st system transmission terminal 111 of car 1 at the first time after starting as shown by sign (1) of FIG. 1. At this time point, because data is not received from other transmission terminals, only "Car 1 and 1st system data" which is the data of the source transmission terminal is described as transmission data D1, and the following columns are assumed to be a blank column.

FIG. 4 is a structure view of data D2 transmitted from 1st system transmission terminal 112 of car 2 as shown by sign (2) of FIG. 1. Data "Car 2 and 1 st system data" of car 2 of the source transmission terminal 112 is transmitted along with the content of data D1 of the 1 st system transmission terminal of car 1 received when the above-mentioned data D1 from 1st system transmission terminal 111 of car 1 is received. This data D2 reaches all the transmission terminals through either of 1 st system or 2nd system main transmission line as shown in FIG. 1. It becomes possible to transmit data to all the transmission terminals because transmission terminal 112 of the 1st system of car 2 relays data D1 of transmission terminal 111 of the 1 st system of car 1 which was not able to be transmitted directly due to the trouble of transmission line. Other transmission terminals also transmit the data of the source terminal and the data from other transmission terminals received in a similar way. And, each terminal repeats the transmission at a suitable cycle (for instance, 10ms). As a result, all terminals can receive the data from all other terminals.

FIG. 5 shows transmission data DI in the state to receive the data from all of other terminals.

In the explanation of FIG. 1, it was assumed that transmission terminal 111 of the 1st system of car 1 transmits first, and transmission terminal 112 of the 1st system of car 2 transmits next. However, it is possible to transmit in any order thoroughly. Each transmission terminal can transmit data at an arbitrary timing. Because each terminal periodically repeats the transmission, an information interchange each other becomes possible. In this case, both of the data from the source terminal and the data received from other terminals is not necessarily transmitted every time. For instance, the data from the source terminal is transmitted every time, but the data received from other terminals is transmitted once every two or more times, or both are alternately transmitted. Various modifications are considered.

As a result, even if multiple troubles occur in the network, the transmission of data between all transmission terminals becomes possible. Even if the number of cars increases or more troubles occurs, the transmission of data between all the transmission terminals is similarly possible. Moreover, data can be similarly transmitted not only for the disconnection but also troubles of line concentrator (hub) and the transmission terminal.

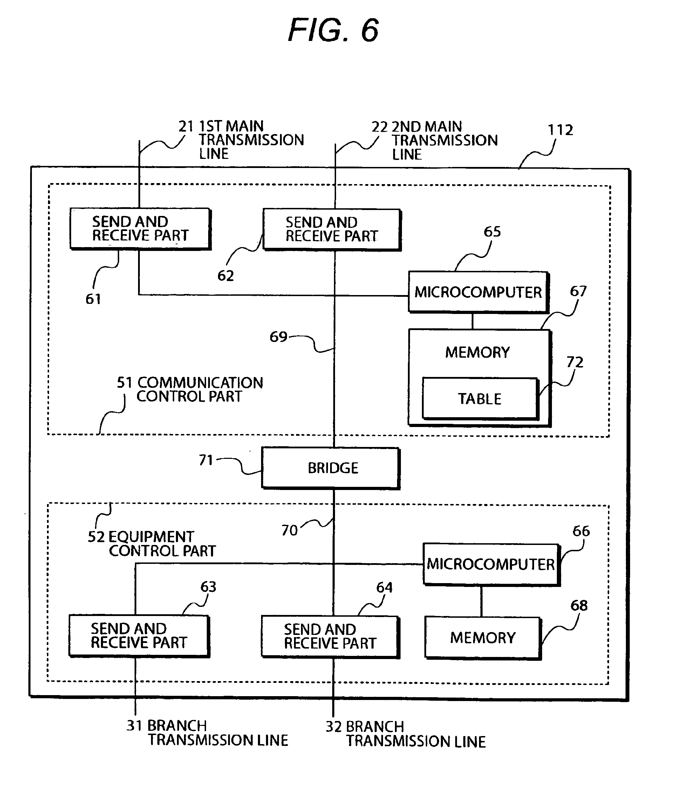

FIG. 6 is a block diagram showing the outline configuration of a transmission terminal in the information transmission system for a rolling stock according to the first embodiment of the present invention. Here, the example of transmission terminal 112 of the 1st system of car 2 is explained. Transmission terminal 112 comprises communication control part 51 which does the transmission with main transmission lines 21, 22, and equipment control unit 52 which does the communication with the each equipment in the car.

Communication control parts 51 comprises send and receive part 61, 62 connected with main transmission lines 21, 22, respectively, microcomputer 65 which controls these send and receive parts, and memory 67. Memory 67 is used as a temporary storage in the send and receive part to maintain table 72 in which the transmission data shown in FIG. 3 to FIG. 5 is written. Send and receive part 61, 62, and microcomputer 65 are connected with bus 69.

Equipment control unit 52 comprises send and receive part 63, 64 connected to branch transmission lines 31, 32, and microcomputer 66 which does data processing. Memory 68 is used as a temporary memory at data processing. Send and receive part 63, 64, and microcomputer 66 are connected with bus 70. Branch transmission lines 31, 32 are connected to under-floor equipment 41, 42, and up-floor equipment 43 to 46, respectively, as explained by FIG. 2.

Internal buses 69 and 70 of communication control part 51 and equipment control unit 52 are connected by using bus bridge 71. Therefore, the exchange of information between both control units with different timing mutually becomes possible. As a result, transmitting the data received from the equipment to the main transmission line as it is or after processing, and transmitting information received from the main transmission line to necessary equipment become possible.

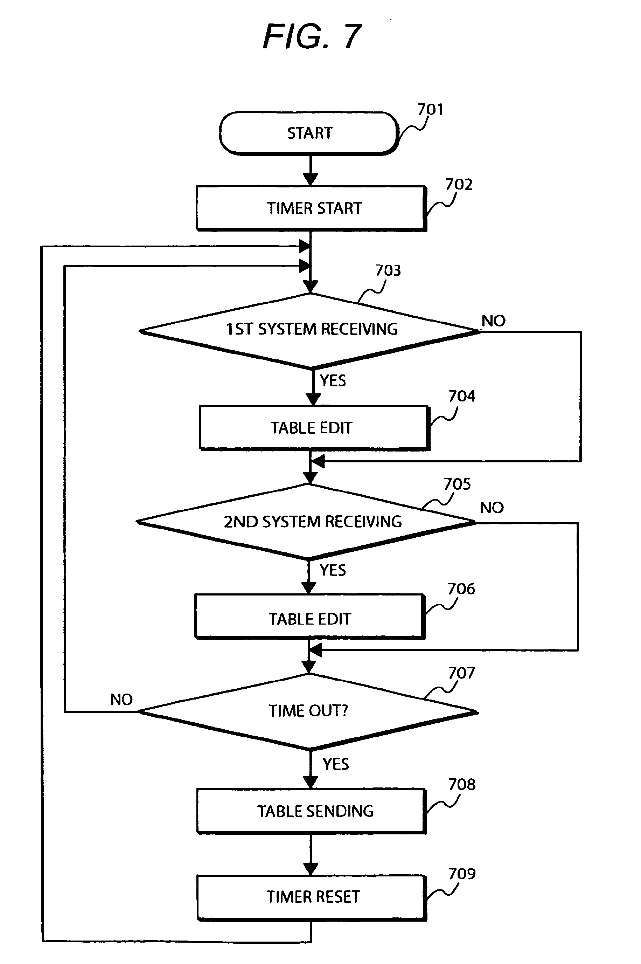

FIG. 7 is a processing flowchart of the data receiving at the transmission terminal in the first embodiment of the present invention. When the power supply is turned on, the processing starts from step 701. In step 702, the timer by which the transmission interval is decided is started. This timer counts one cycle, for instance, 10 ms and times out. The receiving processing in steps 703 to 706 is repeated until this time-out is detected in step 707 described later.

When data is received from 1st system main transmission line 21 in step 703, a data table is overwritten in step 704. The data received from one transmission terminal as shown in FIG. 5 includes the data of all the transmission terminals. Therefore, the data of the same transmission terminal will be received from different transmission terminals two or more times. At this time, older data than the data which has already been recorded in the table is occasionally received according to timing. Data is sequentially numbered for instance in the source station to always update the data of the table to be the latest one, and only when the number of received data is larger than the number of the data of the table, the received data is described in the table in destination station.

When data is received from 2nd systems main transmission line 22 in step 705, data table is overwritten in step 706. The processing at this time is the same as receiving processing steps 703, 704 from 1 st system main transmission line 21. The data described in the table does not have the necessity for distinguishing the data from which 1 st system or 2nd systems. Only the latest data is always overwritten.

When one cycle 10 ms passes, and the time-out is generated in step 707, the transmission processing of the table is done in step 708. First of all, the data of the source transmission terminal is described in the table based on the data received from branch line transmission lines 31 and 32. Next, the table is transmitted to both main transmission lines 21 and 22. Further, necessary data for the each equipment is transmitted based on the data of the table through branch line transmission lines 31 and 32. Afterwards, the timer is reset in step 709, and the processing shifts to the receiving processing at the next cycle.

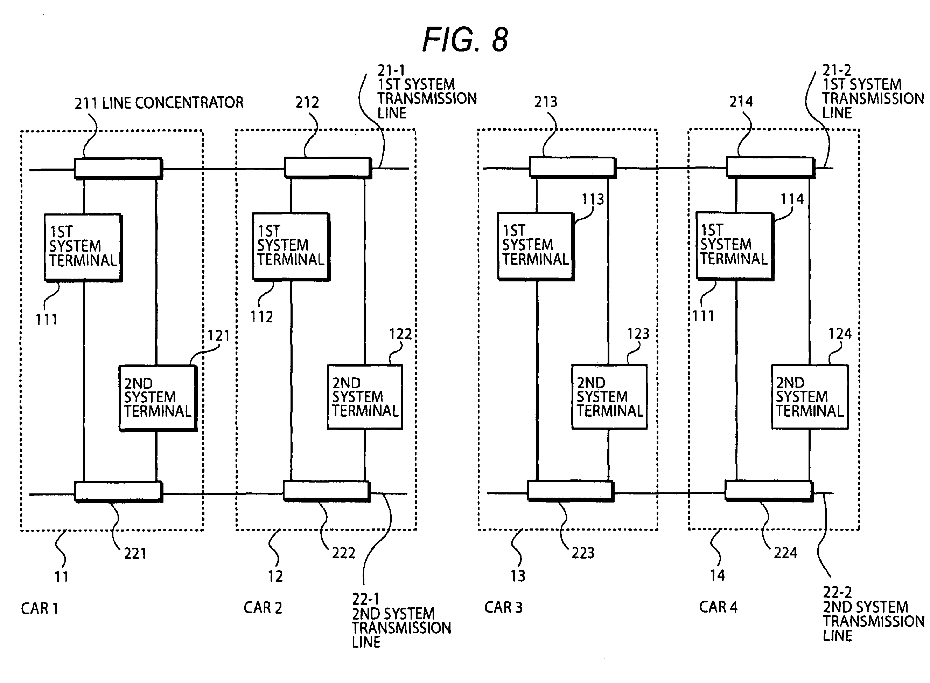

FIG. 8 shows the configuration of the information transmission system when the car is divided in the first embodiment of the present invention. The equipment configuration of each car is basically the same as FIG. 1. Therefore, the same sign is given to avoid the repetition of the explanation. Network configuration is the same even when dividing except that 1 st and 2nd main transmission lines 21 and 22 are divided into 21-1, 21-2, and 22-1, 22-2, respectively. Therefore, data can be transmitted according to a similar procedure even after dividing. Moreover, when cars are connected again, the network configuration can return the same one as FIG. 1, and can transmit data.

Thus, the data of the transmission terminal and the data received from other transmission terminals are transmitted to both of two main transmission lines in this embodiment. Therefore, other transmission terminals will relay even when the trouble occurs, and direct transmission of the data is impossible and the data transmission becomes possible. Therefore, even if a multiple breakdown happens, the communication can be continued without cutting off. Moreover, the processing at the transmission terminal at the trouble is quite the same as that when it is normal, and the information interchange between the transmission terminals is unnecessary. Moreover, temporary interruption of the transmission due to the trouble is not occurred.

The efficiency of the network lowers comparatively because not only the data of the source transmission terminal but also the data of other transmission terminals are transmitted simultaneously in this embodiment. Therefore, when the amount of the data to be transmitted is a little, this embodiment is especially suitable.

When this embodiment is applied to the transmission of the configuration management data to confirm the address of the equipment and the state, etc. when the network is initialized, the information interchange between the transmission terminals is easily carried out even due to the trouble in the network. In general, the amount of the configuration management data is a little, and it is best for the application of this embodiment.

When this embodiment is applied to the data transmission (the transmission of control information of the equipment etc.) after initial izing, it is possible to construct easily the network which is strong for the trouble. However, it takes several times time of the transmission cycle to transmit data to all the transmission terminals at the trouble. Therefore, it is preferable to set the transmission cycle shorter than the response time necessary to control the equipment.

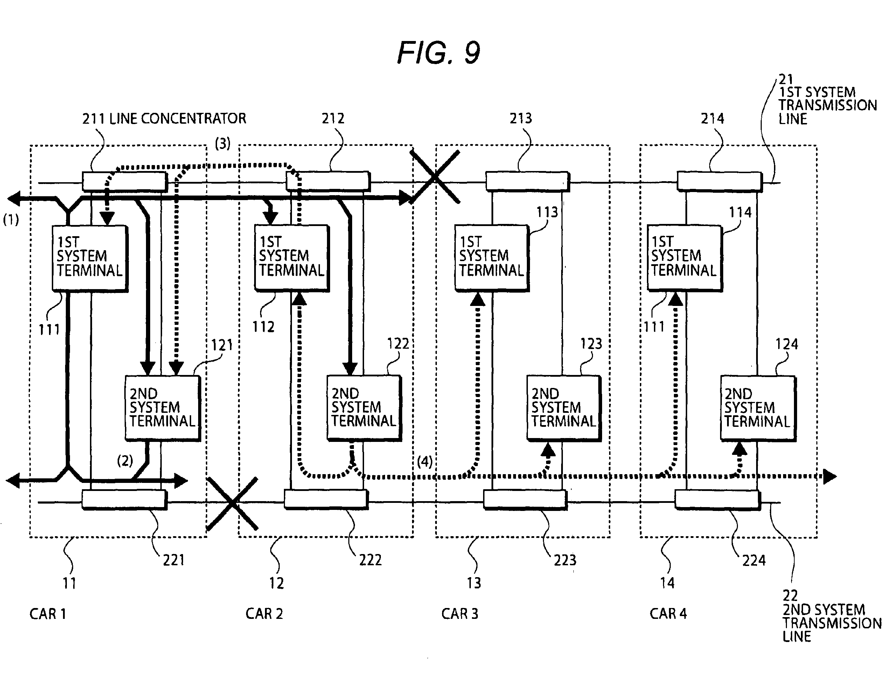

FIG. 9 shows the configuration of an information transmission system for a rolling stock according to a second embodiment of the present invention and the transmission procedure of data. Here, the same sign is put on the same part as FIG. 1 to avoid the repetition of the explanation. In the first embodiment previously described, each transmission terminal was assumed to be one to transmit data to main transmission lines 21 and 22 of 1st and 2nd system. However, Transmission terminal 111 to 114 of 1st system transmit the data to main transmission line 21 of 1 st system in the 2nd embodiment, and transmission terminal 121 to 124 of 2nd system transmit the data to main transmission line 22 of 2nd system.

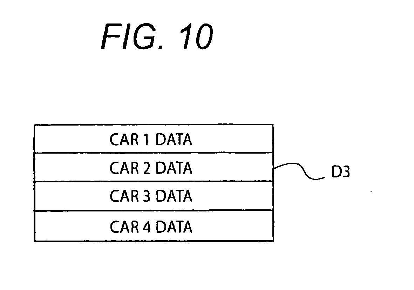

FIG. 10 shows the transmission data in the information transmission system for a rolling stock according to the second embodiment of the present invention. Transmission data D3 in this embodiment is provided only every cars though the data is provided every cars and systems in the first embodiment, and the system is not distinguished. Moreover, the data of the source transmission terminal which the transmission terminal of 1 st system and the transmission terminal of 2nd system transmit is assumed to be the same one. The number of car is written to the corresponding car column of table regardless of the data received from which system in source station.

Here, the transmission procedure of data when the disconnection breakdown occurs is explained referring again to FIG. 9. It is assumed that the disconnection occurs between car 2 12 and car 3 13 in 1 st system main transmission line 21 and between car 1 11 and car 2 12 in 2nd system main transmission line 22 as shown by signs x. Fir st of all, 1st system terminal 111 of car 1 transmits the data to main transmission line 21 of the 1 st system as shown in figure by sign (1). 2nd system terminal 121 of car 1 transmits the data to 2nd system main transmission line 22 as shown in figure by sign (2). Under such a condition, data cannot be transmitted to car 3 13 and car 4 14 through 1st system main transmission line 21, and data cannot be transmitted to car 2 12 to car 4 14 through 2nd system main transmission line 22. Therefore, the data from car 1 11 is not delivered to car 3 13 and car 4 14 through any main transmission lines, and this is a serious trouble.

When data is transmitted, not only the data of the source transmission terminal but also the data of other transmission terminals which have already been received are transmitted simultaneously in this embodiment. It is assumed that the data is not received from other transmission terminals when transmission terminal 111, 121 of car 1 transmits in signs (1) and (2) of FIG. 9, the data of the source transmission terminal is described in transmission data D3, and the following column is assumed to be a blank column. Next, 1 st system terminal 112 of car 2 transmits the data of the source transmission terminal to 1 st system main transmission line 21 along with the received data at sign (3) in figure, and 2nd system terminal 122 of car 2 transmits the data of the source transmission terminal to 2nd system main transmission line 22 along with the received data at sign (4). The data which transmission terminal 112, 122 of car 2 transmits at signs (3) and (4) in figure reaches all the transmission terminals through either of the 1st or the 2nd main transmission line. Transmission terminal 112,122 of car 2 relays the data of car 1 which was not able to be transmitted directly due to the trouble of transmission line. It is, therefore, possible to transmit the data to all the transmission terminals. Other transmission terminals transmit the data of the source transmission terminal and the data received from other transmission terminals in a similar way. And, each terminal repeats the transmission at a suitable cycle, for instance, 10 ms. As a result; all terminals can receive the data from all other terminals. At this time, there is no special regulations in the transmission order, and each transmission terminal can transmit data at an arbitrary timing.

Besides data can be transmitted even if multiple troubles occur as well as the first embodiment previously explained in this embodiment, the transmission processing can be simplified because each transmission terminal transmits data only to one of main transmission lines.

However, the data of each transmission terminal of 1 st system and 2nd system should be assumed to be similar in each car, and peculiar information on each transmission terminal like the inside information etc. of the transmission terminal cannot be transmitted. Moreover, both systems should always operate in the second embodiment though the transmission between equipment is possible if the transmission terminal of one system works in the first embodiment, in which a standby duplex system is composed.

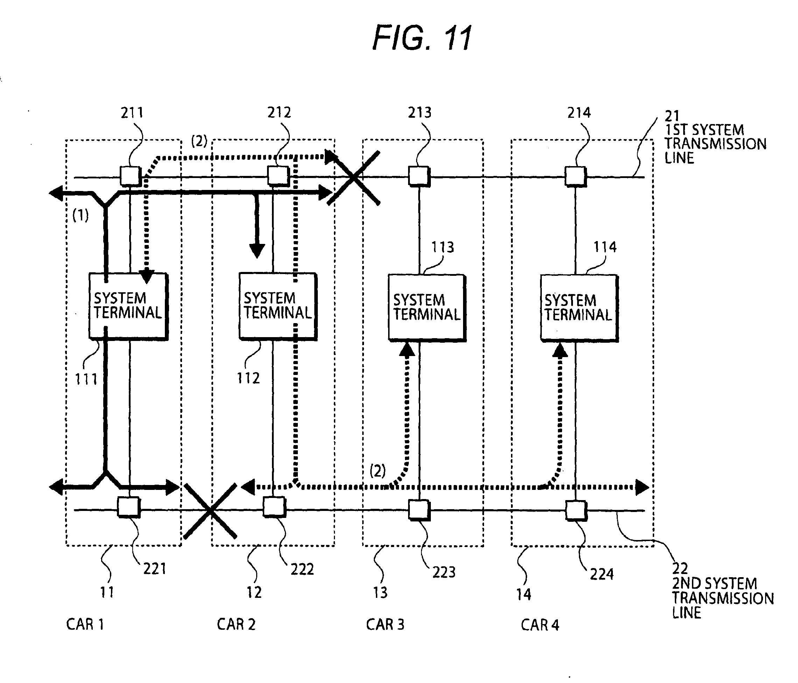

FIG. 11 is a block diagram showing the configuration of the information transmission system for a rolling stock according to a third embodime nt of the present invention. The same sign is put on the same part as FIG. 1 here to avoid the repetition of the explanation. The point that transmission terminals 111 to 114 of car 11 to 14 are not made duplex is different from the configuration of the fi rst embodiment. This configuration is a single system. The configuration of the transmission terminals, the point that these transmission terminals have the function of receiving data from both main transmission lines 21 and 22, and the point that each equipment in car is connected to the transmission terminal, etc. are similar to the first embodiment. Moreover, transmission data of the transmission terminal contains the data received from other transmission terminals, and the configuration is assumed to be the same one as the transmission data in the second embodiment of the present invention.

Here, the transmission procedure of data when the disconnection breakdown occurs is explained referring to FIG. 11. It is assumed that the disconnection occurs between car 2 12 and car 3 13 in 1st system main transmission line 21 and between car 1 11 and car 2 12 in 2nd system main transmission line 22 as shown by signs x. It is assumed that transmission terminal 111 of car 1 11 transmits the data as shown in figure by sign (1), data cannot be transmitted to car 3 13 and car 4 14 through 1 st system main transmission line 21, and data cannot be transmitted to car 2 12 to car 4 14 through 2nd system main transmission line 22. Therefore, the data from car 1 11 is not delivered to car 3 13 and car 4 14 through any main transmission lines, and this is a serious trouble.

When data is transmitted, not only the data of the source transmission terminal but also the data of other transmission terminals which have already been received are transmitted simultaneously in this embodiment. It is assumed that the data is not received from other transmission terminals when transmission terminal 111 of car 1 transmits in signs (1) of FIG. 11, the data of the source transmission terminal is described in transmission data, and the following column is assumed to be a blank column. Next, It is assumed that transmission terminal 112 of car 2 transmits in sign (2) of FIG. 11. At this time, the data of source transmission terminal and the data from 1st system transmission terminal are transmitted. 1 st system transmission terminal 112 of car 2 relays the data of 1st system transmission terminal 111 of car 1 which was not able to be transmitted directly due to the trouble of transmission line. It is, therefore, possible to transmit the data to all the transmission terminals. Other transmission terminals transmit the data of the source transmission terminal and the data received from other transmission terminals in a similar way. And, each terminal repeats the transmission at a suitable cycle, for instance, 10 ms. As a result, all terminals can receive the data from all other terminals.

In this embodiment, data can be transmitted even if multiple troubles occur as well as the first embodiment previously explained, the transmission terminal of each car is in single type, and the configuration of the device becomes simpler. However, because this embodiment is not multiplexed, the reliability to the breakdown of the transmission terminal is inferior. Howe ver, because the network is a duplex system, and the relay function of data is provided, this embodiment is also made highly reliable as well as the first embodiment.

## Claims

1. An information transmission system having two transmission lines (21, 22), and three or more transmission terminals (111-124) connected with these transmission lines, which are operable to transmit information mutually, and store data received from two or more transmission terminals,
**characterized in that**
each said transmission terminal is operable to receive the same information through two said transmission lines, and to transmit periodically the information received from other transmission terminals in addition to source information to be sent by said transmission terminal when transmitting.

2. The information transmission system according to claim 1, wherein each of said transmission terminals has a corresponding second transmission terminal to form a duplex system and wherein each said transmission terminal and its corresponding second transmission terminal are operable to transmit the same information to different transmission lines (21, 22).

3. An information transmission system according to claim 1 or claim 2, suitable for use in rolling stock.

4. Rolling stock having an information transmission system according to any one of claims 1 to 3, wherein said two transmission lines (21, 22) are independent and operable to connect two or more cars (11, 12, 13, 14) in a railway train, each car having at least one transmission terminal (111-124), and wherein said transmission terminals are connected with said transmission lines, said information transmission system being capable of transmitting information mutually among the transmission terminals of the cars.

5. A method of operating an information transmission system having two transmission lines (21, 22), and three or more transmission terminals (111-124) connected with said transmission lines, which can transmit information mutually, comprising the steps of:
said transmission terminals receiving the same information through two said transmission lines, and
each said transmission terminal transmitting periodically the information received from other transmission terminals in addition to source information of said transmission terminal.

6. The information transmission method according to claim 5, wherein each of said transmission terminals has a corresponding second transmission terminal to form a duplex system and wherein each said transmission terminal and its corresponding second transmission terminal transmit the same information to different transmission lines (21, 22).

## Patentansprüche

1. Informationsübertragungssystem mit zwei Übertragungsleitungen (21, 22) und drei oder mehr daran angeschlossenen Übertragungs-Endgeräten (111-124) zur wechselseitigen Übertragung von Informationen und zur Speicherung von Daten, die von zwei oder mehreren Endgeräten empfangen werden,
**dadurch gekennzeichnet, daß** jedes Endgerät so betätigbar ist, daß es die gleiche Information über zwei der Übertragungsleitungen empfängt und die von anderen Endgeräten empfangenen Informationen zusätzlich zu Quelleninformationen, die von dem Endgerät bei der Übertragung zu senden sind, periodisch überträgt.

2. Informationsübertragungssystem nach Anspruch 1, wobei jedes der Übertragungs-Endgeräte mit einem entsprechenden zweiten Übertragungs-Endgerät ein Duplexsystem bildet und wobei jedes Endgerät und sein entsprechendes zweites Endgerät so betätigbar sind, daß sie die gleiche Information an unterschiedliche Übertragungsleitungen (21, 22) senden.

3. Informationsübertragungssystem nach Anspruch 1 oder 2, das zur Verwendung bei rollendem Inventar geeignet ist.

4. Rollendes Inventar mit einem Informationsübertragungssystem nach einem der Ansprüche 1 bis 3, wobei die beiden Übertragungsleitungen (21, 22) unabhängig an zwei oder mehrere Wagen (11, 12, 13, 14) eines Eisenbahnzuges anschließbar sind, wobei jeder Wagen mindestens ein Übertragungs-Endgerät (111-124) aufweist, wobei die Endgeräte mit den Übertragungsleitungen verbunden sind, und wobei das Informationsübertragungssystem die wechselseitige Übertragung von Informationen zwischen den Endgeräten der Wagen gestattet.

5. Verfahren zum Betrieb eines Informationsübertragungssystems mit zwei Übertragungsleitungen (21, 22) und drei oder mehreren daran angeschlossenen Übertragungs-Endgeräten (111-124), die Informationen wechselseitig übertragen können, wobei
die Endgeräte die gleiche Information über zwei der Übertragungsleitungen empfangen und
jedes Endgerät die von anderen Endgeräten empfangenen Informationen zusätzlich zu Quelleninformationen des Endgeräts periodisch überträgt.

6. Informationsübertragungsverfahren nach Anspruch 5, wobei jedes der Übertragungs-Endgeräte mit einem entsprechenden zweiten Übertragungs-Endgerät ein Duplexsystem bildet und jedes Endgerät und sein entsprechendes zweites Endgerät die gleiche Information an unterschiedliche Übertragungsleitungen (21, 22) senden.

## Revendications

1. Système de transmission d'informations ayant deux lignes de transmission (21, 22), et trois terminaux de transmission (111 à 124) ou plus connectés à ces lignes de transmission, qui sont opérationnelles pour transmettre des informations mutuellement, et mémoriser des données reçues de deux terminaux de transmission ou plus,
**caractérisé en ce que**
chaque terminal de transmission est opérationnel pour recevoir les mêmes informations via lesdites deux lignes de transmission, et pour transmettre périodiquement les informations reçues d'autres terminaux de transmission en plus d'informations sources destinées à être envoyées par ledit terminal de transmission lors d'une transmission.

2. Système de transmission d'informations selon la revendication 1, dans lequel chacun desdits terminaux de transmission a un second terminal de transmission correspondant pour former un système duplex et dans lequel chaque terminal de transmission et son second terminal de transmission correspondant sont opérationnels pour transmettre les mêmes informations à différentes lignes de transmission (21, 22).

3. Système de transmission d'informations selon la revendication 1 ou 2, adapté pour être utilisé dans un matériel roulant.

4. Matériel roulant ayant un système de transmission d'informations selon l'une quelconque des revendications 1 à 3, dans lequel lesdites deux lignes de transmission (21, 22) sont indépendantes et opérationnelles pour connecter un ou plusieurs véhicules (11, 12, 13, 14) d'un train ferroviaire, chaque véhicule ayant au moins un terminal de transmission (111 à 124), et dans lequel lesdits terminaux de transmission sont reliés auxdites lignes de transmission, ledit système de transmission d'informations étant capable de transmettre des informations mutuellement entre les terminaux de transmission des véhicules.

5. **Procédé de fonctionnement d'un système de** transmission d'informations ayant deux lignes de transmission (21, 22), et trois terminaux de transmission (111 à 124) ou plus reliés auxdites lignes de transmission, qui peuvent transmettre des informations mutuellement, comportant les étapes de :
réception par lesdits terminaux de transmission des mêmes informations via lesdites deux lignes de transmission, et
la transmission par chacun desdits terminaux de transmission périodiquement des informations reçues d'autres terminaux de transmission en plus d'informations sources dudit terminal de transmission.

6. Procédé de transmission d'informations selon la revendication 5, dans lequel chacun desdits terminaux de transmission a un second terminal de transmission correspondant pour former un système duplex et dans lequel chacun desdits terminaux de transmission et son second terminal de transmission correspondant transmettent les mêmes informations à différentes lignes de transmission (21, 22).
